# EUROPÄISCHE PATENTSCHRIFT

(11) **EP 3 068 986 B1**
(45) Veröffentlichungstag und Bekanntmachung des Hinweises auf die Patenterteilung: **21.08.2019**
(21) Anmeldenummer: 14771235.0
(22) Anmeldetag: 11.09.2014
(51) Int. Cl.: F01N 3/20, F01N 3/28

(54) **EINSPRITZMODUL UND ABGASSTRANG MIT EINSPRITZMODUL**
INJECTION MODULE AND EXHAUST SYSTEM HAVING AN INJECTION MODULE
MODULE D'INJECTION ET LIGNE DE GAZ D'ÉCHAPPEMENT PRÉSENTANT UN MODULE D'INJECTION

(30) Priorität: 15.11.2013 DE 102013223296
(43) Veröffentlichungstag der Anmeldung: 21.09.2016
(73) Patentinhaber: Robert Bosch GmbH, 70442 Stuttgart (DE)
(72) Erfinder: ZEYER, Bruno, 71672 Marbach A.N. (DE); BUERGLIN, Markus, 71254 Ditzingen (DE)
(86) Internationale Anmeldenummer: PCT/EP2014/069388
(87) Internationale Veröffentlichungsnummer: WO 2015/071005

(56) Entgegenhaltungen:
- WO-A1-2006/122561
- DE-A1-102011 018 569
- DE-T5-112012 000 089
- FR-A1- 2 977 632

## Beschreibung

### Abgasstrang mit Einspritzmodul

Die Erfindung betrifft einen Abgasstrang, der mit einem Einspritzmodul ausgestattet ist, insbesondere einem Einspritzmoduf zum Einspritzen eines Reduktionsmittels in den Abgasstrang eines Verbrennungsmotors.

### Stand der Technik

Zur Entstickung der Abgase von Dieselmotoren hat sich die SCR-Technik ("selective catalytic reduction") mit einem harnstoffhaltigen Reduktionsmittel ("AdBlue®") bewährt. Hierbei wird das flüssige Reduktionsmittel fein zerstäubt vor einem Reduktionsmittelkatalysator in die Abgasströmung eingesprüht.

Um einen hohen Umsetzungsgrad der Stickoxide bei möglichst geringem Reduktionsmittelschlupf zu erreichen, muss das Reduktionsmittel möglichst homogen auf der Katalysatoreintrittsfläche verteilt werden. Dies wird entweder durch im Abgasrohr angebrachte Mischer oder durch eine lange Mischstrecke zwischen der Stelle, an der das Reduktionsmittel eindosiert wird, und dem Katalysator erreicht.

DE 44 17 238 A1 offenbart eine Einrichtung zur Minderung von Stickoxiden im Abgas eines Verbrennungsmotors mit einer Einlaufkammer, einem Hydrolyse-Katalysator, einem DeNOx-Katalysator und einem Oxidationskatalysator, bei der die Einlaufkammer, der Hydrolyse-Katalysator, der DeNOx-Katalysator und der Oxidationskatalysator eine im Wesentlichen zylindrische, vom Abgas in der genannten Reihenfolge durchströmbare Einheit bilden und der Durchmesser der Einlaufkammer den Durchmesser des Hydrolyse-Katalysators übersteigt. Hier-durch wird erreicht, dass das in der Einlaufkammer mit einem Reduktionsmittel vermischte Abgas mit einer homogenen Reduktionsmittelverteilung und einer über den Querschnitt des Abgasstranges möglichst homogenen Abgasstromdichte in die Katalysatoren eintritt.

WO 2006/122561 A1 beschreibt ein Verfahren zum Zerstäuben einer oder mehrerer Flüssigkeiten in einem Abgassystem eines Verbrennungsmotors oder einer Gasturbine, wobei das Verfahren umfasst, unter Druck stehende Flüssigkeit(en) durch einen oder mehrere Auslässe einer Düse zu leiten. Jeder Auslass hat eine Ausrichtung derart, dass ein Flüssigkeitsstrom bzw. Flüssigkeitsströme, der bzw. die von dem einen oder den mehreren Auslässen abgegeben wird bzw. werden, in einem Abstand von dem einen oder den mehreren Auslässen auf sich selbst oder aufeinander auftrifft bzw. auftreffen, um so eine Zerstäubung der Flüssigkeit zu bewirken.

Die DE 11 2012 000 089 T5 beschreibt eine Vorrichtung zum Mischen einer wässrigen Harnstofflösung mit Abgas, bei der ein Mischrohr vorgesehen ist.

Um die notwendige Homogenisierung des Reduktionsmittels mit dem Abgas zu bewirken, ist ein möglichst flacher, aber vollflächiger Reduktionsmittel-Sprühnebel ("Spray") erforderlich. Um Ablagerungen des Reduktionsmittels in der Abgas-anlage zu vermeiden, darf nur eine begrenzte Menge des Reduktionsmittels auf die Wände der Abgasanlage treffen.

### Offenbarung der Erfindung

Eine Aufgabe der Erfindung besteht darin, auch in kompakten Abgasanlagen eine hohe Homogenisierung der Abgase und des Reduktionsmittels zu bewirken und gleichzeitig das Auftreffen von Reduktionsmittel auf die Wände der Abgasanlage zu minimieren.

Ein bei der Erfindung eingesetztes Einspritzmodul (Dosiermodul) zum Einspritzen eines Reduktionsmittels in den Abgasstrang eines Verbrennungsmotors weist wenigstens zwei Austrittsöffnungen zur Ausgabe jeweils wenigstens eines Reduktionsmittel-Primärstrahls auf. Dabei sind die Austrittsöffnungen derart angeordnet und ausgebildet, dass die durch die Austrittsöffnungen austretenden Reduktionsmittel-Primärstrahlen aufeinander treffen und durch die Kollision einen Sprühnebel im Abgasstrang erzeugen.

Die Erfindung umfasst ein Verfahren des Einspritzens eines Reduktions-mittels in den Abgasstrang eines Verbrennungsmotors, wobei das Verfahren einschließt, wenigstens zwei Reduktionsmittel-Primärstrahlen so in den Abgas-strang einzuspritzen, dass sie aufeinander treffen und einen geeigneten Sprüh-nebel im Abgasstrang erzeugen.

Auf diese Weise wird durch Strahlkollision im Abgasstrang ein flacher und homogener Reduktionsmittel-Sprühnebel erzeugt, der sich optimal mit den durch den Abgasstrang strömenden Abgasen vermischt und so eine effektive Schadstoffreduktion bei geringem Reduktionsmittelverbrauch ermöglicht.

In einer Ausführungsform haben die Austrittsöffnungen einen Abstand von weniger als 5 mm, insbesondere von weniger als 2 mm, voneinander, so dass die Primärstrahlen von ihrer jeweiligen Austrittsöffnung bis zum Kollisionspunkt kompakte Strahlen sind, die noch nicht in einzelne Tropfen zerfallen sind. Sind die Primärstrahlen bereits in einzelne Tropfen zerfallen, fehlen immer wieder Kollisionspartner; durch kompakte Strahlen wird die Kollision dagegen optimiert.

In einer Ausführungsform sind die Austrittsöffnungen so ausgebildet, dass die Reduktionsmittel-Primärstrahlen in einem Winkel von mehr als 30° aufeinander treffen, um die Kollision zwischen den beiden Primärstrahlen zu optimieren und eine optimale Zerstäubung der Primärstrahlen zu bewirken.

In einer Ausführungsform sind die Austrittsöffnungen so ausgebildet, dass die Reduktionsmittel-Primärstrahlen nach einer freien Wegstrecke von weniger als 10 mm, insbesondere von weniger als 5 mm, aufeinander treffen, um zu vermeiden, dass die Primärstrahlen vor dem Kollisionspunkt in einzelne Tropfen aufreißen.

Die Austrittsöffnungen haben vorzugsweise einen kreisrunden Querschnitt, da der Strahldurchmesser und der Austrittswinkel des Strahls bei einem kreisrunden Querschnitt genau definiert sind. Die Austrittsöffnungen können aber auch mit einem ovalen Querschnitt ausgebildet sein.

Die Erfindung umfasst auch einen Abschnitt eines Abgasstrangs eines Verbrennungsmotors mit einem Einspritzmodul.

Hierbei weist der Abschnitt des Abgasstrangs zusätzlich zum Einspritzmodul ein Abschirmblech auf, das derart ausgebildet und angeordnet ist, dass es ein Auftreffen des Sprühnebels auf eine Wand des Abgasstranges verhindert. Unerwünschte Ablagerungen des Reduktionsmittels, welche die Strömungseigenschaften im Abgasstrang negativ beeinflussen können, werden auf diese Weise zuverlässig verhindert.

Das Abschirmblech weist hierbei eine oder mehrere Öffnungen auf, die eine definierte Strömung der Abgase durch das Abschirmblech ermöglichen, um das Strömungsverhalten der Abgase im Abgasstrang gezielt zu beeinflussen.

In einer Ausführungsform ist das Abschirmblech so angeordnet, dass zwischen dem Abschirmblech und wenigstens einer Wand des Abgasstrangs ein Stauraum ausgebildet ist. Im Betrieb entsteht im Stauraum ein Abgas-Überdruck, der eine Strömung von Abgasen durch im Abschirmblech ausgebildete Löcher bewirkt, was eine besonders effektive Vermischung der Abgase mit dem erfindungs-gemäß zerstäubten Reduktionsmittel zur Folge hat.

In einer Ausführungsform ist ein zusätzliches Blech stromaufwärts des Einspritz-moduls angeordnet, um zu verhindern, dass der Reduktionsmittel-Sprühnebel an der Kollisionsstelle der Primärstrahlen durch die Abgasströmung verweht wird, und so eine sichere Sprühnebel-Erzeugung durch die Primärstrahlen zu gewähr-leisten.

Erfindungsgemäß sind stromaufwärts des Einspritzmoduls ein Oxidations-katalysator und stromabwärts des Einspritzmoduls ein Reduktionskatalysator angeordnet, um eine optimale Abgasreinigung zu bewirken. Das Einspritzmodul ist hierbei in einem Verbindungskanal angeordnet, der den Ausgang des Oxidationskatalysators mit dem Eingang des Reduktionskatalysators ¬strömungs-mäßig verbindet, um das Reduktionsmittel den Abgasen unmittelbar vor dem Reduktionskatalysator zuzuführen.

Hierbei wird die Strömungsrichtung der Abgase durch den Verbindungskanal geändert. Dies ermöglicht eine besonders kompakte Bauform des Abgasstrangs und bewirkt eine Verwirbelung der Abgasströmung. Eine solche Verwirbelung der Abgasströmung hat eine besonders effektive Vermischung der Abgase mit dem Reduktionsmittel-Sprühnebei zur Folge.

Kurze Beschreibung der Figuren:
Figur 1 zeigt eine schematische Schnittansicht eines Abgasstrangs.
Figur 2 zeigt eine schematische Teilschnittansicht eines Einspritzmoduls.
Figur 3 zeigt eine Schnittdarstellung des Verbindungskanals zwischen den Katalysatoren des Abgasstrangs in einer vergrößerten Darstellung.
Figur 4 zeigt eine Schnittdarstellung des Verbindungskanals zwischen den Katalysatoren des Abgasstrangs aus einer anderen Blickrichtung.

### Figurenbeschreibung:

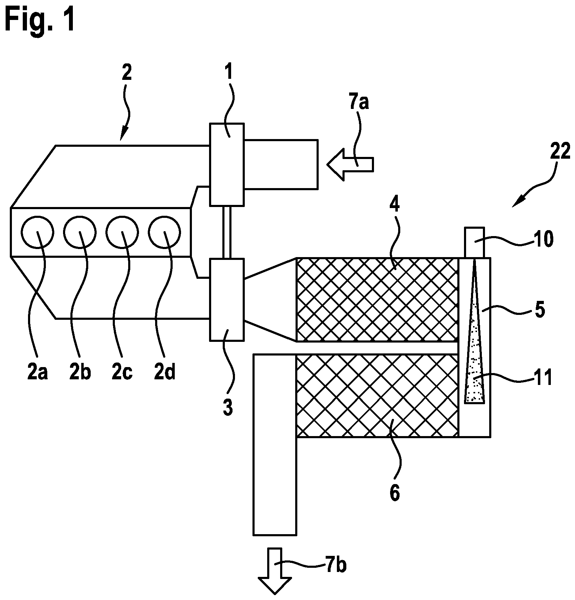

Figur 1 zeigt eine schematische Ansicht eines Verbrennungsmotors 2 mit einem Abgasstrang 22.

Frischluft 7a wird über einen Verdichter 1 eines Turboladers 1, 3 in die Zylinder 2a-2d des Motors 2 gefördert. Die im Betrieb in den Zylindern 2a-2d entstehenden Abgase gelangen durch eine Turbine 3 des Turboladers 1, 3, die den Verdichter 1 antreibt, in einen stromabwärts des Verbrennungsmotors 2 angeordneten Oxidationskatalysator 4.

Neben dem Oxidationskatalysator 4 befindet sich ein Reduktionsmittelkatalysator 6. Dieser kann als SCR-Katalysator 6 oder als Partikelfilter mit einer SCR-Kat-Beschichtung ausgebildet sein. Der Ausgang des Oxidationskatalysators 4 und der Eingang des Reduktionsmittelkatalysators 6 sind durch einen Verbindungskanal 5 strömungsmäßig miteinander verbunden, so dass die Abgase aus dem Oxidationskatalysator 4 durch den Verbindungskanal 5 in den Reduktionsmittelkatalysator 6 strömen. Die durch die Katalysatoren 4, 5 gereinigten Abgase 7b treten aus dem Reduktionsmittelkatalysator 6 in die Umgebung aus.

An dem Verbindungskanal 5 ist ein erfindungsgemäßes Einspritzmodul 10 angebracht, das von einem üblichen und daher nicht im Detail gezeigten Reduktionsmitteldosiersystem mit einem flüssigen Reduktionsmittel, insbesondere einer wässrigen Harnstofflösung ("AdBlue®"), versorgt wird.

Das Einspritzmodul 10 erzeugt im Betrieb im Verbindungskanal 5 zwischen dem Oxidationskatalysator 4 und dem Reduktionsmittelkatalysator 6 einen Reduktionsmittel-Sprühnebel 11.

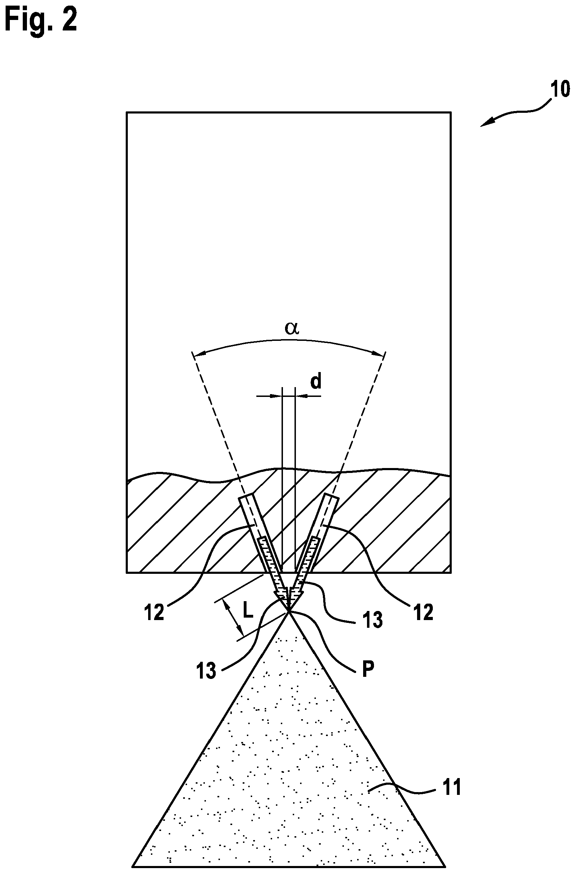

Figur 2 zeigt das dem Verbindungskanal 5 zugewandte Ende des Einspritzmoduls 10 in einer vergrößerten Teilschnittdarstellung. Das in der Figur 2 gezeigte Einspritzmodul 10 hat zwei Austrittsöffnungen 12 für das Reduktionsmittel, durch die im Betrieb jeweils ein Reduktionsmittel-Primärstrahl 13 austritt. Weitere, in den Figuren nicht gezeigte Ausführungsbeispiele erfindungsgemäßer Einspritzmodule 10 können zusätzliche Austrittsöffnungen 12 aufweisen.

Die aus den Austrittsöffnungen 12 austretenden Primärstrahlen 13 kollidieren innerhalb des in der Fig. 2 nicht gezeigten Verbindungskanals 5 im Bereich vor dem Einspritzmodul 10. Aufgrund des jeweiligen Impulses der Primärstrahlen 13 wird im Verbindungskanal durch die Kollision nach dem "Collision-Beam-Prinzip" ein fein zerstäubter Reduktionsmittel-Sprühnebel 11 erzeugt. Der auf diese Weise erzeugte Reduktionsmittel-Sprühnebel 11 ist vollflächig und flach ausgestaltet und somit besonders gut geeignet, um eine effektive Vermischung des Reduktionsmittels mit den Abgasen, die durch den Verbindungskanal 5 strömen, zu bewirken.

Der Abstand d zwischen den Austrittsöffnungen 12 beträgt weniger als 5 mm, insbesondere weniger als 2 mm. Aufgrund des geringen Abstandes d zwischen den Austrittsöffnungen 12 sind die Primärstrahlen 13 im Bereich zwischen den Austrittsöffnungen 12 und dem Kollisionspunkt P der beiden Primärstrahlen 13 kompakte Strahlen, die noch nicht in einzelne Tropfen aufgerissen sind; Durch das Aufeinandertreffen kompakter Primärstrahlen 13 wird die Kollision optimiert, da jeder Teil eines ersten Primärstrahls 13 auf einen korrespondierenden Teil eines zweiten Primärstrahls 13 trifft und keine Lücken in den Primärstrahlen 13 vorhanden sind, in denen keine Kollision auftritt.

Die Austrittsöffnungen 12 haben vorzugsweise einen kreisrunden Querschnitt, da der Strahldurchmesser und der Austrittswinkel des Primärtrahls 13 bei einem kreisrunden Querschnitt genau definiert sind. Die Austrittsöffnungen 12 können aber auch mit einem ovalen Querschnitt ausgebildet sein.

Es können auch weitere, in der Figur 2 nicht gezeigte, Austrittsöffnungen 12 vorhanden sein, um zusätzliche Primärstrahlen 13 zu erzeugen, die vorzugsweise auf den selben Kollisionspunkt P ausgerichtet sind. Alternativ können mehrere Kollisionspunkte P vorhanden sein, auf die jeweils wenigstens zwei Primärstrahlen 13 ausgerichtet sind, so dass mit jedem Kollisionspunkt P eine Sprühnebelquelle im Verbindungskanal 5 vorhanden ist.

In einer Ausführungsform sind die Austrittsöffnungen 12 so ausgebildet, dass die Primärstrahlen 13 in einem Winkel α von mehr als 30° aufeinander treffen, um die Kollision zwischen den beiden Primärstrahlen 13 zu optimieren und auf diese Weise eine optimale Zerstäubung der Primärstrahlen 13 zu bewirken, wodurch im Verbindungskanal 5 ein besonders feiner Sprühnebel 11 erzeugt wird und sich das Reduktionsmittel besonders effektiv mit den Abgasen im Abgasstrang 22 vermischt.

In einer Ausführungsform sind die Austrittsöffnungen 12 so ausgebildet, dass die Primärstrahlen 13 nach einer freien Wegstrecke L, d.h. nach dem Austritt aus ihrer jeweiligen Austrittsöffnung 12, von weniger als 10 mm, insbesondere von weniger als 5 mm, aufeinander treffen. Auf diese Weise wird zuverlässig vermieden, dass die Primärstrahlen 13 vor dem Kollisionspunkt P in einzelne Tropfen zerfallen, wodurch die Effektivität der Sprühnebelerzeugung verringert werden würde.

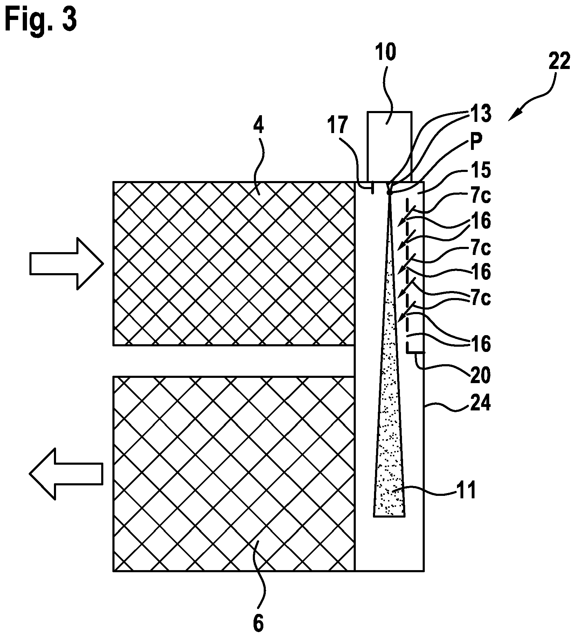

Figur 3 zeigt eine Schnittdarstellung des Verbindungskanals 5, der den Ausgang des Oxidationskatalysators 4 mit dem Eingang des Reduktionsmittelkatalysators 6 verbindet, in einer vergrößerten Darstellung.

Um zu vermeiden, dass der durch die Kollision der Primärstrahlen 13 erzeugte Reduktionsmittel-Sprühnebel 11 durch die aus dem Oxidationskatalysator 4 austretende Abgasströmung gegen die dem Oxidationskatalysator 4 gegenüberliegende (in der Figur 3 rechts dargestellte) Wand 24 des Verbindungskanals 5 gedrückt wird und dort unerwünschte Ablagerungen bildet, ist vor der Wand 24, insbesondere zwischen dem Einspritzmodul 10 und der Wand 24, ein Abschirmblech 20 angeordnet. Das Abschirmblech 20 ist schmaler als der Verbindungskanal 5, so dass seitlich (in der Darstellung der Figur 3 oberhalb) des Abschirmblechs 20 ein Teil der aus dem Oxidationskatalysator 4 austretenden Abgasströmung in einen zwischen der Wand 24 des Verbindungskanals 5 und dem Abschirmblech 20 ausgebildeten Stauraum 15 strömt und dort einen Überdruck (Straudruck) erzeugt.

Das Abschirmblech 20 kann insbesondere als kostengünstiges Lochblech ausgeführt sein.

Durch in dem Abschirmblech 20 ausgebildete Öffnungen 16 strömen die Abgase aus dem Stauraum 15 in einen Bereich auf der dem Oxidationskatalysator 4 zugewandten Seite des Abschirmblechs 20, wo sie sich mit dem Reduktionsmittel-Sprühnebel 11 vermischen. Die Abgasströmung aus dem Stauraum 15 durch die Öffnungen 16 in den Bereich des Sprühnebels 11 ist durch Abgasströmungspfeile 7c symbolisiert.

Ein zusätzliches Ablenkblech 17 kann stromaufwärts neben dem Einspritzmodul 10 montiert sein, um ein Verwehen des Reduktionsmittel-Sprühnebels 11 am Kollisionspunkt P der Primärstrahlen 13 zu verhindern und so eine sichere Sprühnebel-Erzeugung aus den Primärstrahlen 13 zu gewährleisten.

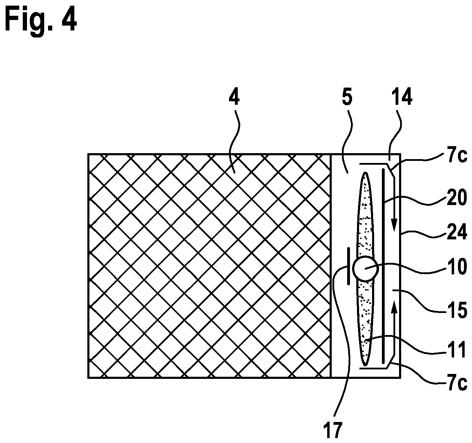

Figur 4 zeigt eine Schnittdarstellung des Abgasstrangs 22 aus Richtung des Einspritzmoduls 10, d.h. in der Darstellung der Figur 3 von oben, betrachtet.

Auf der rechten Seite der Figur 4 sind rechts von dem Oxidationskatalysator 4 der Verbindungskanal 5, das Einspritzmodul 10 und der von dem Einspritzmodul 10 erzeugte Reduktionsmittel-Sprühnebel 11 zu erkennen.

Zwischen dem Einspritzmodul 10 und dem Ausgang des Oxidationskatalysators 4 befindet sich das zusätzliche Abschirmblech 17, wie es zuvor im Zusammenhang mit der Figur 3 beschrieben worden ist.

Rechts vom Einspritzmodul 10 ist zwischen dem Reduktionsmittel-Sprühnebel 11 und der Wand 24 des Verbindungskanals 5 das Abschirmblech 20 zu erkennen. Zwischen dem Abschirmblech 20 und der Wand 24 des Verbindungskanals 5 ist der zuvor beschriebene Stauraum 15 sichtbar. Die Abgasströmung in den Stauraum 15 ist durch Abgasströmungspfeile 7c symbolisiert.

## Patentansprüche

1. Abschnitt eines Abgasstrangs (22) eines Verbrennungsmotors (2) mit einem Einspritzmodul (10) zum Einspritzen eines Reduktionsmittels in den Abgasstrang (22) eines Verbrennungsmotors (2),
wobei stromaufwärts des Einspritzmoduls (10) ein Oxidationskatalysator (4) und stromabwärts des Einspritzmoduls (10) ein Reduktionskatalysator (6) angeordnet ist,
wobei das Einspritzmodul (10) in einem Verbindungskanal (5) zwischen dem Oxidationskatalysator (4) und dem Reduktionskatalysator (6) angeordnet ist, und wobei die Strömungsrichtung der Abgase durch den Verbindungskanal (5) umgelenkt wird,
wobei ein Abschirmblech (20) zwischen dem Einspritzmodul (10) und einer dem Oxidationskatalysator (4) gegenüberliegenden Wand (20) des Abgasstrangs (22) angeordnet und derart ausgebildet ist, dass es ein Auftreffen des Sprühnebels (11) auf die dem Oxidationskatalysator (4) gegenüberliegende Wand (24) des Abgasstrangs (22) verhindert, wobei das Abschirmblech (20) eine oder mehrere Öffnungen (16) aufweist **dadurch gekennzeichnet dass** das Einspritzmodul (10) wenigstens zwei Austrittsöffnungen (12) zur Ausgabe wenigstens eines Reduktionsmittel-Primärstrahls (13) aufweist, wobei die Austrittsöffnungen (12) derart ausgerichtet sind, dass die durch die Austrittsöffnungen (12) austretenden Reduktionsmittel-Primärstrahlen (13) aufeinandertreffen und einen Sprühnebel (11) im Abgasstrang (22) erzeugen,
wobei sich das Abschirmblech (20) ausschließlich zwischen dem Einspritzmodul (10) und der dem Oxidationskatalysator (4) gegenüberliegenden Wand (20) des Abgasstrangs (22) erstreckt.

2. Abschnitt eines Abgasstrangs (22) nach Anspruch 1, wobei die Austrittsöffnungen (12) einen Abstand (d) von weniger als 5 mm, insbesondere von weniger als 2 mm voneinander aufweisen.

3. Abschnitt eines Abgasstrangs (22) nach einem der Ansprüche 1 oder 2, wobei die Austrittsöffnungen (12) so ausgerichtet sind, dass die Reduktionsmittel-Primärstrahlen (13) in einem Winkel (α) von mehr als 30° aufeinandertreffen.

4. Abschnitt eines Abgasstrangs (22) nach einem der Ansprüche 1 bis 3, wobei die Austrittsöffnungen (12) so ausgerichtet sind, dass die Reduktionsmittel-Primärstrahlen (13) nach einer freien Wegstrecke (L) von weniger als 10 mm, insbesondere von weniger als 5 mm, aufeinandertreffen.

5. Abschnitt eines Abgasstrangs (22) nach einem der Ansprüche 1 bis 4, wobei das Abschirmblech (20) ein planares Abschirmblech (20) ist.

6. Abschnitt eines Abgasstrangs (22) nach einem der vorhergehenden Ansprüche, wobei das Abschirmblech (20) so angeordnet ist, dass zwischen dem Abschirmblech (20) und wenigstens einer Wand (24) des Abgasstrangs (22) ein Stauraum (15) ausgebildet ist.

7. Abschnitt eines Abgasstrangs (22) nach einem der Ansprüche 1 bis 6, wobei stromaufwärts des Einspritzmoduls (10) ein Ablenkblech (17) angeordnet ist.

8. Verfahren des Einspritzens eines Reduktionsmittels in einen Abschnitt eines Abgasstrangs (22) nach einem der Ansprüche 1 bis 7, wobei das Verfahren umfasst, wenigstens zwei Reduktionsmittel-Primärstrahlen (13) so in den Abgasstrang (22) einzuspritzen, dass sie aufeinandertreffen und in einem Bereich des Abgasstrangs (22) einen Sprühnebel (11) erzeugen.

## Claims

1. Section of an exhaust tract (22) of an internal combustion engine (2) having an injection module (10) for injecting a reducing agent into the exhaust tract (22) of an internal combustion engine (2),
wherein an oxidation catalytic converter (4) is arranged upstream of the injection module (10) and a reduction catalytic converter (6) is arranged downstream of the injection module (10),
wherein the injection module (10) is arranged in a connecting duct (5) between the oxidation catalytic converter (4) and the reduction catalytic converter (6), and
wherein the flow direction of the exhaust gases is diverted by the connecting duct (5),
wherein a shield plate (20) is arranged between the injection module (10) and a wall (20), which is situated opposite the oxidation catalytic converter (4), of the exhaust tract (22), which shield plate is designed such that it prevents the spray mist (11) from impinging on that wall (24) of the exhaust tract (22) which is situated opposite the oxidation catalytic converter (4), wherein the shield plate (20) has one or more openings (16), **characterized in that** the injection module (10) has at least two outlet openings (12) for discharging at least one reducing agent primary jet (13), wherein the outlet openings (12) are directed such that the reducing agent primary jets (13) emerging through the outlet openings (12) collide with one another and produce a spray mist (11) in the exhaust tract (22),
wherein the shield plate (20) extends exclusively between the injection module (10) and that wall (20) of the exhaust tract (22) which is situated opposite the oxidation catalytic converter (4).

2. Section of an exhaust tract (22) according to Claim 1, wherein the outlet openings (12) have a spacing (d) of less than 5 mm, in particular of less than 2 mm, to one another.

3. Section of an exhaust tract (22) according to either of Claims 1 and 2, wherein the outlet openings (12) are directed such that the reducing agent primary jets (13) collide with one another at an angle (α) of greater than 30°.

4. Section of an exhaust tract (22) according to one of Claims 1 to 3, wherein the outlet openings (12) are directed such that the reducing agent primary jets (13) collide with one another after a free traveling distance (L) of less than 10 mm, in particular of less than 5 mm.

5. Section of an exhaust track (22) according to one of Claims 1 to 4, wherein the shield plate (20) is a planar shield plate (20).

6. Section of an exhaust tract (22) according to one of the preceding claims, having a shield plate (20) which is designed and arranged such that it prevents the spray mist (11) from impinging on a wall (24) of the exhaust tract (22).

7. Section of an exhaust tract (22) according to Claims 1 to 6, wherein a diverting plate (17) is arranged upstream of the injection module (10).

8. Method for injecting a reducing agent into a section of an exhaust tract (22) according to one of Claims 1 to 7, wherein the method comprises the injection of at least two reducing agent primary jets (13) into the exhaust tract (22) such that said reducing agent primary jets collide with one another and produce a spray mist (11) in a region of the exhaust tract (22).

## Revendications

1. Section d'une ligne d'échappement (22) d'un moteur à combustion (2) doté d'un module d'injection (10) destiné à injecter un agent réducteur dans la ligne d'échappement (22) d'un moteur à combustion (2),
dans laquelle un catalyseur d'oxydation (4) est agencé en amont du module d'injection (10) et un catalyseur de réduction (6) est agencé en aval du module d'injection (10),
dans laquelle le module d'injection (10) est agencé dans un canal de raccordement (5) entre le catalyseur d'oxydation (4) et le catalyseur de réduction (6), et dans laquelle la direction de flux des gaz d'échappement est déviée au travers du canal de raccordement (5), dans laquelle une plaque de blindage (20) est agencée entre le module d'injection (10) et une paroi (20) de la ligne d'échappement (22) opposée au catalyseur d'oxydation (4) et est réalisée de telle façon qu'elle empêche le brouillard pulvérisé (11) de heurter la paroi (24) de la ligne d'échappement (22) opposée au catalyseur d'oxydation (4), dans laquelle la plaque de blindage (20) comporte une ou plusieurs ouvertures (16),
**caractérisée en ce que** le module d'injection (10) comporte au moins deux ouvertures de sortie (12) pour la fourniture d'au moins un faisceau primaire d'agent réducteur (13), dans laquelle les ouvertures de sortie (12) sont orientées de telle façon que les faisceaux primaires d'agent réducteur (13) sortant par les ouvertures de sortie (12) convergent et produisent un brouillard pulvérisé (11) dans la ligne d'échappement (22),
dans laquelle la plaque de blindage (20) s'étend en outre entre le module d'injection (10) et la paroi (20) de la ligne d'échappement (22) opposée au catalyseur d'oxydation (4).

2. Section d'une ligne d'échappement (22) selon la revendication 1, dans laquelle les ouvertures de sortie (12) possèdent un écart (d) indépendamment l'une de l'autre inférieur à 5 mm, en particulier inférieur à 2 mm.

3. Section d'une ligne d'échappement (22) selon l'une des revendications 1 ou 2, dans laquelle les ouvertures de sortie (12) sont orientées de telle sorte que les faisceaux primaires d'agent réducteur (13) convergent avec un angle (α) supérieur à 30°.

4. Section d'une ligne d'échappement (22) selon l'une des revendications 1 à 3, dans laquelle les ouvertures de sortie (12) sont orientées de telle sorte que les faisceaux primaires d'agent réducteur (13) convergent après un parcours libre (L) inférieur à 10 mm, en particulier inférieur à 5 mm.

5. Section d'une ligne d'échappement (22) selon l'une des revendications 1 à 4, dans laquelle la plaque de blindage (20) est une plaque de blindage (20) plane.

6. Section d'une ligne d'échappement (22) selon l'une des revendications précédentes, dans laquelle la plaque de blindage (20) est agencée de telle sorte qu'une capacité de retenue (15) est réalisée entre la plaque de blindage (20) et au moins une paroi (24) de la ligne d'échappement (22).

7. Section d'une ligne d'échappement (22) selon l'une des revendications 1 à 6, dans laquelle une plaque de déviation (17) est agencée en amont du module d'injection (10) .

8. Procédé d'injection d'un agent réducteur dans une section d'une ligne d'échappement (22) selon l'une des revendications 1 à 7, dans lequel le procédé inclut d'injecter au moins deux faisceaux primaires d'agent réducteur (13) dans la ligne d'échappement (22) de sorte qu'ils convergent et produisent un brouillard pulvérisé (11) dans une zone de la ligne d'échappement (22).
